Europäisches Patentamt

(19) European Patent Office

Office européen des brevets

(11) Publication number: **0 218 461**
**B1**

# (12) EUROPEAN PATENT SPECIFICATION

(45) Date of publication of the patent specification:
06.12.89

(21) Application number: **86307530.5**

(22) Date of filling: **01.10.86**

(51) Int. Cl.⁴: **H 01 B 3/46**

---

(54) Use of silicone-compounds.

---

(30) Priority: **02.10.85 GB 8524238**

(43) Date of publication of application:
**15.04.87 Bulletin 87/16**

(45) Publication of the grant of the patent:
**06.12.89 Bulletin 89/49**

(84) Designated Contracting States:
**AT BE CH DE ES FR GB GR IT LI NL SE**

(56) References cited:
**DE-A-2 035 361**
**GB-A-2 059 980**

**CHEMICAL ABSTRACTS, vol. 89, no. 18, October 1978, page 52, abstract no. 147951g, Columbus, Ohio, US; & JP-A-78 73 250**
**CHEMICAL ABSTRACTS, vol. 84, 1976, page 93, abstract no. 18933a, Columbus, Ohio, US; & JP-A-75 97 644**

(73) Proprietor: **FOCAS LIMITED, 16 St. Martin's- Le-Grand, London EC1A 4EJ (GB)**

(72) Inventor: **Rowe, James Thomas, 25 Perrys Lane Wroughton, Swindon Wiltshire (GB)**
Inventor: **Penneck, John Richard, Treeve 2 Westway, Lechlade Gloucestershire (GB)**
Inventor: **Swinmurn, John Christopher, 150 University Avenue, Los Altos California (US)**
Inventor: **Singleton, Raymond William, The Nook Down Ampney, Cirencester Gloucestershire (GB)**

(74) Representative: **Cross, Rupert Edward Blount, BOULT, WADE & TENNANT 27 Furnival Street, London EC4A 1PQ (GB)**

EP 0 218 461 B1

**Description**

This invention relates to the use of a silicon polymer composition on a non-electrically conductive article in a high voltage environment in excess of 1kV, and in particular to such an article in the form of an optical fibre cable.

Polymeric materials are widely used for insulating a wide variety of electrical apparatus, but they pose problems for high voltage applications in contaminated atmospheres where moisture or fog, together with salts, dust particles and ionic pollution, causes leakage currents to flow across the surface of the insulation. These currents cause a rise in temperature with consequent moisture evaportion, and ultimately dry band formation. The electrical stress across these dry bands often exceeds the breakdown stress of the air-insulation interface, so that discharge or spark scintillation takes place. The spark temperature is extremely high, often 2000°C or higher, and the heat produced thereby may be sufficient to cause degradation of the insualtion surface with the ultimate formation of carbonaceous spots. These carbonaceous spots usually link up in dendritic fashion and the organic insulation fails by progressive creepage tracking.

Over the years, many solutions to this problem have been proposed. Perhaps the most effective has been the incorporation of particulate hydrated alumina, preferably the trihydrate, in fairly substantial quantities into, for example, butyl rubber, epoxy resins, especially of the cycloaliphatic type, and, more recently, into ethylene propylene rubbers. It was found in practise that the polymeric materials containing large proportions of aluminium trihydrate were substantially protected against tracking. However, in some cases, the materials still failed by tracking and further, in many cases, the materials failed by a gradual and progressive in-depth erosion or cratering of the insulation which occurs during over-voltage exposure. Further, the amount of aluminium hydrate required to produce the anti-tracking effect is very high and is usually in the region of 50 - 90 % by weight of the entire insulation. In the case of polymers that are shaped by moulding or extrusion or used to make heat-recoverable articles, a content of aluminium hydrate this high is undesirable because the high temperature used and/or the radiation employed in cross-linking causes loss of the hydrated water with accompanying development of porosity and the formation of voids leading ultimately to failure of the insulation. The high filler content is also undesirable because it is detrimental to certain mechanical properties of the polymer, such as ultimate elongation.

Another solution to the tracking and erosion problem is disclosed in GB-A-1 337 951, and GB-A-4 399 064 which disclose an anti-tracking filler composition comprising a mixture of aluminium hydrate and the oxides of transition elements, elements of the lanthanide series or of the non-transuranic actinide series. The composition is effective in preventing tracking and also functions to retard erosion. However, the oxides, such as iron oxides, are often highly coloured which, in some cases precludes their use due to environmental and/or aesthetic considerations.

Silicone elastomers have advantageous properties, such as flexibility, which make them desirable for certain applications, including high voltage applications, and although the above-mentioned approaches can in general be used when the base polymer is a silicone, the effect of adding the relatively high levels of filler to produce good antitracking properties is to reduce further the inherently relatively poor physical properties, such as abrasion resistance, of silicone material.

GB-A-1 541 494 relates to an improved method of forming a composition having tracking resistant insulating properties in which the known anti-tracking additive aluminium hydrate is added to an organopolysiloxane. It is known that it is difficult to cure silicone-based materials in the presence of carbon black in the material. Curing can be improved in such conditions using typically relatively small amounts of a suitable catalyst such as a platinum compound or complex.

Platinum is also known as a flame retardant additive for polymeric material, and, for example, is disclosed, in combination with fumed titanium dioxide, as such an additive in silicone rubber in GB-A-1 274 839. In general, however, flame retardant additives, such as antimony trioxide/halogen donor systems, are known to have an adverse effect on the anti-tracking properties of the material.

The propensity of a material to allow creepage current to flow over its surface and thus develop tracking, is usually determined by an inclined plane test carreid out in accordance with ASTM D 2303, in which a sample plaque of the material is attached between two electrodes and subjected to a high potential difference in the presence of a specified liquid contaiminant flowing at a specified rate over its surface. One test of ASTM D 2303 applies a voltage between the electrodes that is uiformly increased with time, and the time before the tracking occurs, usually defined as the time in which tracking proceeds a specified distance between the electrodes, is taken as a measure of the tracking resistance of the material. In particular, the electrodes are disposed two inches (five centimetres) apart along the inclined surface of the plaque, and initially a potential difference of 2.5 kV is applied therebetween. The potential difference is then increased by 0.25 kV every hour. Failure of the material subjected to ASTM D 2303 is either (i) by tracking, which leads to complete electrical breakdown between the electrodes, and can in practical applications cause a catastropic failure of the electrical apparatus on which the material is mounted or of which it forms part, (ii) by erosion, which leads to one or more local craters and eventually holes through the thickness of the material, this not usually being catastrophic in use, or (iii) by erosion along a narrow channel that extends in a comparatively short period of time from one electrode to the other. Accordingly, the basic requirement for a high voltage insulating material is that any failure should be by erosion rather than by tracking. For the purpose of the present invention, a material is regarded as failing the ASTM D 2303 test if (a) tracking occurs, (b) if the material catches fire (usually subsequent to track formation), or (c) if the material erodes to half the distance between the electrodes in less than 200 minutes. Usually the test is carried out on four plaques of the same material, and the test is terminated if three out of the four plaques fail. A material that passes this test is herein considered to be "an anti-tracking, or non-tracking material".

According to the invention an insulating material comprising a silicone polymer, titanium dioxide having a surface area of at least 10 sqm per gram, and at least about 25 parts of platinum per million parts by weight of the total weight of the material, the platinum being in an unsupported form, is used on a non-electrically conductive article in a high voltage environment in excess of 1kV.

It has thus been found, quite unexpectedly, that such use gives good anti-tracking properties.

The material can comprise from 99.9 percent to 47.6 percent by weight of a polydiorganosiloxsane polymer, from 0 percent to 47.6 percent by weight of a reinforcing silica filler, from 0.1 percent to 4.76 percent by weight of an organic peroxide, from 2 percent to 15 percent by weight of titanium oxide having a surface area of at least 10 sqm per gram (BET method), from 2 percent to 15 percent by weight of a transition metal oxide other than titanium dioxide, and at least 25 parts of platinum per million parts by weight of the total weight of the material, the platinum being in an unsupported form.

Suitable forms of silicone polymer from which silicone rubber may be derived for the insulating material are polymers of which at least some of the repeating units are derivable from, for example, dimethyl siloxane, methyl ethyl siloxane, methyl vinyl siloxane, 3, 3, 3-trifluoropropyl methyl siloxane, polydimethyl siloxane, dimethyl siloxane/methyl vinyl siloxane co-polymers, fluoro silicones, eg those derived from 3, 3, 3-trifluoropropyl siloxane. The silicone polymer may be, for example, a homopolymer or a copolymer of one or more of the above-mentioned siloxanes, and is advantageously polydimethyl siloxane or a copolymer of dimethyl siloxane with up to 5 % by weight of methyl vinyl siloxane. Silicone modified EPDM, such as Royaltherm (available from Uniroyal), silicone gels, and room temparature vulcanising silicones are also suitable materials.

Preferably, the silicone rubber comprises from 47.6 % to 99.9 % of a polydiorganosiloxane polymer wherein each organic radical is selected from a group consisting of a methyl radical, a vinyl radical, a 3, 3,3-trifluoropropyl radical and a phenyl radical, there being from 0 to 2 inclusive percent vinyl radicals based on the total number of organic radicals in the polydiorganosiloxane polymer, there being from 0 to 50 inclusive percent 3, 3,3-trifluoropropyl radicals based on the total number of organic radicals in the polydiorganosiloxane polymer, there being from 0 to 10 inclusive percent of phenyl radicals based on the total number of organic radicals in the polydiorganosiloxane polymer, there being from 1.98 to 2 002 inclusive organic radicals per silicon atom in the polydiorganosiloxane polymer; from 0 % to 47.6 % of a reinforcing silica filler; and from 0.1 % to 4.76 % of an organic peroxide; the percentages of silica and peroxide being by weight of the total weight of the rubber.

With levels of platinum additive below 25 ppm, which itself is a very small quantity and difficult to measure, it is very difficult to ensure good dispersion throughout the composition, so that a material having consistent characteristics, and in particular consistently good anti-tracking properties, cannot be assured. Preferably, the platinum level is higher, at 50 ppm, and may be present in amounts up to 100, 200, 350, 500 ppm or even higher. Thus the platinum should be present at a level, and in any unsupported form, to allow good, that is to say substantially homogeneous, dispersion. Platinum is understood to be in a supported form when precipitated as a metal on a base such as alumina. When not so precipitated, it is said to be in an unsupported form. The platinum may be present as elemental platinum added as a solution of chloroplatinic acid in iso propyl alcohol.

The material also comprises titanium dioxide, and especially fumed titanium dioxide, advantageously present in an amount from 2 % to 15 % by weight of the total weight of the material, preferably form 2 % to 10 %, most preferably from 2 % to 7 %, and especially 3.4 %. The titanium dioxide has a high surface area, of at least 10 sqm per gram, and up to 250 sqm per gram, most preferably from 35 to 65 sqm per gram, as measured by the BET method. The BET (Brunnauer, Emmett and Teller) method is a nitrogen absorption method that assumes the area covered by a nitrogen molecule to be 16.2 sq Angstroms. This method is referred to in, for example, "The Physics and Chemistry of Surfaces", by N K Adam, published by Dover, and in "Solid Surfaces and the Gas-Solid Interface", Advances in chemistry Series, Volume 33.

The material may, if desired, contain other fillers, for example reinforcing fillers, flame retardants, extending fillers, pigments, and mixtures thereof. A suitable extending filler is diatomaceous earth, and a suitable pigment is chromium oxide or iron oxide. It will be appreciated that such fillers would be in addition to a reinforcing filler such as silica that is added to the silicone polymer to form the silicone rubber.

Other materials such as antioxidants, for example Irganox 1010 (from Ciba Geigy); U V stabilisers, for example iron oxide; thermal stabilisers, for example cerium salts; extending silicone oils; plasticisers; cross-linking agents, for example peroxide, particularly dicumyl peroxide; may also be added to the material of the invention.

A transition metal oxide other than titanium dioxide, and for example (red) iron oxide, including mixed oxides and mixtures of oxides, may advantageously be included in the material, to serve as both a pigment and as a UV stabiliser, this latter function usually being a requirement when the high voltage article is to be used outdoors. In such cases, the other transition metal oxide may be present in an amount from 2 % to 15 % by weight of the total weight of the material, preferably from 2 % to 10 %, most preferably from 2 % to 7 %, and especially 3.4 %. The elements from which transition metal oxides are formed are considered to be the elements of sub-groups IVa, Va, VIa, VIIa, and Group VIII of the Mendeleef periodic table which are not also in the nontransuranic actinide series, e. g., titanium, zirconium, and hafnium, vanadium, niobium, and tantalum; chromium, molybdenum and tungsten; manganese, technetium, and rhenium; and iron, cobalt, nickel, ruthenium, rhodium, palladium, osmium, iridium and platinum. Among suitable oxides, mixed oxides and mixtures, there may be mentioned for example

(i) Transition metal oxides, for example $TiO_2$, $V_2O_5$, $Cr_2O_3$, $Fe_2O_3$, $NiO_2$, $Ni_3O_4$, $Co_2O_3$, $Co_3O_4$, $MoO_3$, $WO_3$, $Nb_2O_5$, and mixtures thereof.

(ii) Mixed oxides containing one or more transition metals, for example, nickel titanate, nickel molybdate and cobalt silicate.

(iii) Any of the above oxides, mixed oxides or mixtures carried on an ahydrous alumina support, e. g., nickel cobalt molybdate on alumina and cobalt oxide on alumina $CoO.Al_2O_3$ (blue cobalt aluminate).

In any event, it will be appreciated that the fillers selected will be compatible with the silicone polymer, and will depend on the application of the article containing the material, including the environment in which it is to be used.

Advantageously, the platinum may be provided as part of a flame retardant compound, and the modifiers FR-1 and FR-2 available as flame retardant additives from Dow Corning Corporation under the trade name SILASTIC have been found to be particularly useful. These flame retardent additives are believed to contain salts of titanium, platinum, and cerium, in a silicone rubber base.

In an especially preferred embodiment, the material comprises silicone rubber, platinum, fumed titanium dioxide, red iron oxide as a pigment, and a peroxide. The silicone rubber may be E324/70 from J-Sil, and constitute 62.6 %, the platinum and titanium dioxide may be provided as FR-1 flame retardant additive from Dow Corning, and constitute 30 %, and the iron oxide and peroxide may constitute 5 % and 2.4 % respectively, all percentages being by weight of the total composition. The silicone rubber is believed to contain 76 % of polydiorganosiloxane, 21.6 % of fume silica as a reinforcing filler, and 2.4 % of a structure control additive containing 0.1 mole % vinyl radicals, the percentages being given by weight of the total weight of the silicone rubber. The flame retardant additive is believed to contain 50 % polydiorganosiloxane polymer, 33 % ground silica as an extending filler, 15 % fume titanium dioxide, 2 % cerium oxide, the percentages being given by weight of the total weight of the additive, and 200 parts of platinum per million parts of the total weight of the additive. Accordingly, the preferred material comprises 62.8 % polydiorganosiloxane, 22.5 % fume silica, 6.8 % ground silica, 3.4 % fume titanium dioxide, 3.4 % red iron oxide, 1.2 % peroxide as a curing agent, 0.5 % cerium oxide as a thermal stabiliser, and 50 ppm platinum.

It has been found that the levels at which the platinum is added to the polymer, or rubber, of the material, do not have any significant adverse effect on the physical properties of the material, and allow it to be processed, for example compounded, moulded, extruded etc, in the usual way. It has been found that the presence of the platinum enables the physical properties of high strength silicone polymers to be maintained. In general, when fillers exceed about 35 % to 40 % by weight of the total weight of the starting polymer, the compound is found to be difficult to process and leads to a final material that is stiff, brittle and not very useful for the applications envisaged herein.

The insulating material may be formed, for example by extruding or moulding, into discrete articles, for example hollow articles such as tubular components, for mounting on electrical equipment, including cable splice covers where high voltage insulating and anti-tracking properties are required. A useful feature in this context is the ability to make articles from the material that have dimensionally-recoverable, for example heat-shrinkable, properties. An additive may be necessary to impart recoverability to some base components. An additive, such as a silicone resin, is necessary to provide recoverability to the silicone rubber material. Alternatively, recoverability of the article may be provided by combining one article of non-recoverable material and another, thermoplastic, component acting as a holdout.

A recoverable article is an article the dimensional configuration of which may be made to change appreciably when subjected to the appropriate treatment. The article may be heat-recoverable such that the dimensional configuration may be made to change when subjected to a heat treatment. Usually these articles recover, on heating, towards an original shape from which they have previously been deformed but the term "heat-recoverable", as used herein, also includes an article which, on heating, adopts a new configuration, even if it has not been previously deformed.

In their most common form, such articles comprise a heat-shrinkable sleeve made from a polymeric material exhibiting the property of elastic or plastic memory as described, for example, in US-A-2 027 962; US-A-3 086 242 and US-A-3 597 372. As is made clear in, for example, US-A-2 027 962 the original dimensionally heat-stable form may be a transient form in a continuous process in which, for example, an extruded tube is expanded, whilst hot, to a dimensionally heat-unstable form but, in other applications, a preformed dimensionally heat stable article is deformed to a dimensionally heat unstable form in a separate stage.

The polymeric material may be cross-linked at any stage in its production that will enhance the desired dimensional recoverability. One manner of producing a heat-recoverable article comprises shaping the polymeric material into the desired heat-stable form, subsequently cross-linking the polymeric material, heating the article to a temperature above the crystalline melting point or, for amorphous materials at the softening point, as the case may be, of the polymer, deforming the article and cooling the article whilst in the deformed state so that the deformed state of the article is retained. In use, since the deformed state of the article is heat-unstable, application of heat will cause the article to assume its original heat-stable shape.

In other articles, as described, for example, in GB-A-1 440 524 an elastomeric member such as an outer tubular member is held in a stretched state by a second member, such as an inner tubular member, which, upon heating weakens and thus allows the elastomeric member to recover.

The hollow articles, however, need not be recoverable, but may be elastomeric. Elastomeric articles may be provided as push-on or roll-on articles for applications as set out above for recoverable articles, such as high voltage cable splices covers.

Alternatively, the material may be extruded, or otherwise deposited directly on to a substrate, for the above-mentioned purposes, including, for example, the formation of a high voltage electrical insulator. In this respect, for example, the material may be extruded to form an outer jacket on a fibre optic cable. The construction of the fibre optic cable may be of any desired form. Such a cable, and its use in a high voltage environment is disclosed in GB-A-2 132 788. As disclosed in this specification there is a requirement for a fibre optic cable to extend from an overhead electrical conductor at high voltage to a location at earth potential. Steps are taken to minimise the flow of leakage current therealong, but in practice this is unlikely, at least in environments contaminated by water, salt, or other pollution, to be prevented completely. Accordingly, the outer surface of the cable has to be of an anti-tracking material.

The following Examples and comparative test results illustrate the present invention and its advantages.

Unless otherwise stated, the components are given in amounts expressed as a percentage by weight of the weight of the total composition. The concentration of platinum, however, is expressed by weight in parts per million of the weight of the total composition.

Materials as specified were formed into rectangular plaques, four plaques for each composition of material, and subjected to the track and erosion resistance test of ASTM D 2303 as described above. It is known that anomalous results can arise from such testing, and that testing different plaques of the same material at different times can produce different results. Furthermore, in some instances, care has to be taken in interpreting the results, particularly in respect of the third type of failure discussed above, so as properly to determine whether failure has been by tracking or by erosion. Accordingly, results of such a test are viewed, in general, with regard to the trend they portray as components within the composition are varied. Whenever a failure of one plaque of a particular composition is by tracking rather than by erosion, then that composition is by tracking rather than by erosion, then that composition as a whole is considered as failure of the test.

The time (in minutes) before failure (F) occurred under the test of ASTM D 2303 was noted in each case. Where no failure mode is given, the material was still performing satisfactorily when the test was terminated after the time shown.

Examples A to E were prepared based on a compound of silicone rubber designated E324-70 from J-Sil, and increasing proportions of SILASTIC FR-1 (Dow Corning) additive. The platinum concentration in the FR-1 additive is given separately in brackets, and has been obtained by calculation from an analysis of the FR-1 additive. Such analysis is difficult to carry out, particularly in respect of the concentration of platinum, so that some latitude is necessary in interpreting the results. The compositions and test results in respect of Examples A to E are given in Table 1.

**Table 1**

| Material | A | B | C | D | E |
|---|---|---|---|---|---|
| Silicone rubber | 77.6 | 72.6 | 67.6 | 62.6 | 57.6 |
| FR-1 | 15 | 20 | 25 | 30 | 35 |
| (Pt in ppm | 30 | 40 | 50 | 60 | 70) |
| Red Iron oxide | 5 | 5 | 5 | 5 | 5 |
| Peroxide | 2.4 | 2.4 | 2.4 | 2.4 | 2.4 |
| Sample 1 | 390 | >390 | 288F | 384F | 408F |
| Sample 2 | 288F | 180F | 360F | 384F | >600 |
| Sample 3 | 174F | >390 | 384F | >600 | 384F |
| Sample 4 | 156F | 234F | 384F | 420F | >600 |

From Table 1, it is to be noted that the progression from the material of Example A to Example E involves a gradual increase in the amount of platinum present in the silicone polymer, a substantially constant ratio of platinum to titanium dioxide, and a decrease in the amount of silica. The amounts of peroxide and iron oxide remain substantially constant. Where failure occurred, this was by way of erosion, and the results of Samples 3 and 4 of material A below 200 minutes are beleived to be due to dispersion problems of the relatively small amount of platinum in the final composition. The result of Sample 2 of material B is considered to be anomalous, in view of the general trend of the results as the level of FR-1 additive is increased.

A further batch of material, F, was compounded, using the same base silicone rubber E324-70 (91 % by weight), but with a peroxide curing agent (2 % by weight), fume titanium dioxide (7 % by weight), and platinum (50 ppm) being added as separate components. The test results for eight plaques are given in Table 2.

**Table 2**

| Sample | 1 | 2 | 3 | 4 | 5 | 6 | 7 | 8 |
|---|---|---|---|---|---|---|---|---|
| Time (Mins) | >516 | 516E | 504E | 480E | >600 | >600 | 576E | 558E |

Where failure occurred, this was by erosion. The results on a material that contained no platinum but that otherwise was the same as material F, showed tracking failure at a time as low as 66 minutes.

Yet other materials were compounded from silicone rubber E324-70 (91 % by weight), peroxide (2 % by weight), fume titanium dioxide (7 % by weight), and platinum to varying amounts, and tested as before. The results are given for materials G to L in Tables 3.1 to 3.6 below.

**Table 3.1**

Material G - 0 ppm platinum

| Sample | 1 | 2 | 3 | 4 |
|---|---|---|---|---|
| Time (Mins) | 126 T | 135 T | 402 T | >402 |

All failures were by tracking.

**Table 3.2**

Material M - 50 ppm platinum

| Sample | 1 | 2 | 3 | 4 |
|---|---|---|---|---|
| Time (Mins) | 408 E | >546 | 546E | 414 E |

**Table 3.3**

Material I - 100 ppm platinum

| Sample | 1 | 2 | 3 | 4 |
|---|---|---|---|---|
| Time (Mins) | 534 E | >534 | 504E | 522E |

**Table 3.4**

Material J - 200 ppm platinum

| Sample | 1 | 2 | 3 | 4 |
|---|---|---|---|---|
| Time (Mins) | 492 E | 522 E | >600 | >600 |

**Table 3.5**

Material K - 350 ppm platinum

| Sample | 1 | 2 | 3 | 4 |
|---|---|---|---|---|
| Time (Mins) | >600 | >600 | 498E | 570 E |

**Table 3. 6**

Material L - 500 ppm platinum

| Sample | 1 | 2 | 3 | 4 |
|---|---|---|---|---|
| Time (Mins) | >600 | >600 | 492 E | >600 |

All the above failures, where they occurred, were by erosion (E).

Material M was prepared from a different silicone rubber, designated E 368 - 50 from J-Sil (82.5 % by weight), with fumed titanium dioxide (15 % by weight), curing peroxide (2.5 % by weight), and platinum (70 ppm). The test results are given in Table 4.

**Table 4 - Material M**

| Sample | 1 | 2 | 3 | 4 |
|---|---|---|---|---|
| Time (Mins) | 366 E | >366 | 300 E | 330 E |

The failures were by erosion.

Examples N, O, P and Q were prepared as set out in Table 5 below, to determine the effect on anti-tracking properties of the addition to a base silicone rubber of equal amounts of different known flame retardant components. Control Example N contained only a peroxide, Perkadox PD-50 S (from Akzo Chemie), which is the same as that used in materials F to M above, added to the silicone rubber E 324 - 70 (from J-Sil). Examples O, P and Q contained a brominated flame retardant, a chlorinated flame retardant, and aluminium trihydrate respectively, and Example N, with no flame retardent is included as a control. The anti-tracking test results (in minutes) are shown for four samples of each composition.

**Table 5**

| Material | N | O | P | Q |
|---|---|---|---|---|
| Silicone rubber | 97.5 | 82.5 | 82.5 | 82.5 |
| decabromo diphenylene oxide | - | 15.0 | - | - |
| Dechlorane plus 515 (Hooker) | - | - | 15.0 | - |
| aluminium trihydrate | - | - | - | 15.0 |
| peroxide | 2.4 | 2.5 | 2.5 | 2.5 |
| Sample 1 | >156 | 24 T | >54 | 150 Flame |
| Sample 2 | 138 E | 30 T | 50 T | 204 Flame |
| Sample 3 | >156 | 28 T | 48 T | >210 |
| Sample 4 | 78 E | 30 T | 24 T | 126 T |

In the test results, T represents a tracking failure mode, E an erosion failure mode, and Flame indicates that the sample caught fire (after tracking). The times quoted show the time to failure, or (>) that the test was terminated at the given time with that particular Sample not having failed. It is thus seen that not only does the addition of each of the flame retardant additives produce tracking failure for each composition, but also that these results are worse than the control Example N. Addition of these flame retardant additives, therefore detracts from the anti-tracking performance of the base rubber.

Examples R, S and T were prepared from the same silicone rubber and peroxide as the Examples of Table 5, and increasing amounts of platinum (in parts per million of the total composition) dissolved in iso propyl alcohol (IPA) were added. Tracking test results for four Samples of each composition are shown in Table 6, together with the results of the control Example N from Table 5.

**Table 6**

| Material | N | R | S | T |
|---|---|---|---|---|
| Silicone rubber | 97.5 | 97.5 | 97.5 | 97.5 |
| Pt in IPA (ppm) | - | 70 | 140 | 200 |
| peroxide | 2.4 | 2.4 | 2.4 | 2.4 |
| Sample 1 | >156 | 66 | - | >144 |
| Sample 2 | 138 | 132 | >144 | 120 |
| Sample 3 | >156 | 138 | 138 | 138 |
| Sample 4 | 78 | 156 | 138 | 138 |

It is seen from the results given in Table 6, that increasing the amount of platinum in the silicone rubber, in combination with a peroxide but containing no titanium dioxide, has no significant effect on the anti-tracking performance of the material.

Example U consists of 200 parts per million by weight of platinum in the form of chloroplatinic acid added to the silicone rubber grade E 368/50 (from J-Sil). Tracking test results for four Samples are given in Table 7.

**Table 7**

| Material | U |
|---|---|
| Silicone rubber + 200 ppm Pt | - |
| Sample 1 | 132 |
| Sample 2 | 120 |
| Sample 3 | 24 T |
| Sample 4 | 210 |

It is seen from Table 7 that the addition of even a comparatively high amount of platinum alone to a silicone rubber, with no titanium dioxide or peroxide curing agent, leads to a poor anti-tracking performance.

Examples V and W were prepared from the same silicone rubber and peroxide as the Examples of Table 5, and increasing amounts of fumed titanium dioxide were added. Tracking test results for four Samples of each composition are shown in Table 8, together with the results of the control Example N from Table 5.

**Table 8**

| Material | N | V | W |
|---|---|---|---|
| Silicone rubber | 97.5 | 87.6 | 82.6 |
| TiO$_2$ (fumed) | - | 10.0 | 15.0 |
| peroxide | 2.4 | 2.4 | 2.4 |
| Sample 1 | >156 | 102 | 54 |
| Sample 2 | 138 | 132 | >240 |
| Sample 3 | >156 | 150 | >240 |
| Sample 4 | 78 | >156 | 174 |

It is seen that the titanium dioxide, being fumed and which thus has a small particle size and a correspondingly large surface area, has no significant effect in the absence of platinum on the anti-tracking performance of the silicone rubber.

Further compositions based on silicone rubber E 324 - 70 and the above - mentioned peroxide curing agent, were compounded to give material X, materials Y and Z additionally containing fume titanium dioxide and no platinum, and materials A1, A2 and A3 that contained platinum and no titanium dioxide. The results are given in Table 9.

**Table 9**

| Material | X | Y | Z | A1 | A2 | A3 |
|---|---|---|---|---|---|---|
| Silicone rubber | 98 | 91 | 84 | 98 | 98 | 98 |
| peroxide | 2 | 2 | 2 | 2 | 2 | 2 |
| TiO$_2$ | 0 | 7 | 14 | 0 | 0 | 0 |
| Platinum (ppm) | 0 | 0 | 0 | 200 | 400 | 600 |
| Sample 1 | 138T | 144T | 138T | 162T | >162 | 24T |
| Sample 2 | 198T | 192T | 192T | 72T | 108T | 24T |
| Sample 3 | >198 | >192 | 114T | >168 | 144T | >72 |
| Sample 4 | 186T | 186T | 156T | 162T | 102T | 72T |

The failures are by tracking, thus again demonstrating the poor performance of the materials not containing both platinum and titanium dioxide.

Example B1 was prepared from the same silicone rubber and peroxide as the Examples of Table 5, and contains SILASTIC FR-1 flame retardant additive, a small amount of red iron oxide pigment (Bayferrox 160M, from Bayer AG), and fumed titanium dioxide. The FR-1 additive contains platinum to 40 ppm of the total composition, and fumed titanium dioxide to 26 % by weight of the FR-1 additive. Tracking test results for four Samples of the composition, together with the results of the control Sample N (Table 5), are shown in Table 10.

**Table 10**

| Material | N | B1 |
|---|---|---|
| Silicone rubber | 97.5 | 67.2 |
| SILASTIC FR-1 | - | 20.0 |
| TiO$_2$ (fumed) | - | 5.3 |
| red iron oxide | - | 5.0 |
| peroxide | 2.4 | 2.5 |
| Sample 1 | >156 | 372E |
| Sample 2 | 138E | 132E |
| Sample 3 | >156 | 366E |
| Sample 4 | 78E | >522 |

It is to be noted that the 20 % quantity of the FR-1 additive of Example B1 corresponds to the level in Example B of Table 1, thus containing about 5 % of the titanium dioxide of the total weight of the FR-1 additive.

It is seen from Table 10 that the addition to the base silicone rubber of the FR-1 additive, with additional fumed titanium dioxide, does enhance the anti-tracking performance. The low failure time of Sample 2 of Example B1 is considered to be an anomalous result.

The fumed titanium dioxide used in the examples, other than when part of the FR-1 additive, is material P-25 from Degussa, and has a surface area within the range 35 to 65 sqm per gram (BET method), and it is believed that the titanium dioxide component of the FR-1 additive has a similarly high value.

From the foregoing results, it will be noted that the anti-tracking performance of silicone rubber is enhanced by the addition in combination of platinum, preferably in an unsupported form, and titanium dioxide of high surface area, such as obtained by fuming for example. It is shown that at best no significant increase in anti-tracking performance is obtained by the inclusion of only one of these additives, and that in some instances the performance is degraded. The addition of known flame retardant materials to silicone rubber is shown adversely to affect the anti-tracking performance of the rubber.

## Claims

1. Use of a composition as an insulating material comprising a silicone polymer, titanium dioxide having a surface area of at least 10 sqm per gram, and at least about 25 parts of platinum per million parts by weight of the total weight of the material, the platinum being in an unsupported form, on a non-electrically conductive article in a high voltage environment in excess of 1kV.

2. Use according to Claim 1, characterised in that the platinum is in the form of chloroplatinic acid.

3. Use according to Claim 1 or Claim 2, characterised in that the titanium dioxide is present as fumed titanium dioxide.

4. Use according to any preceding claim, characterised in that the material includes a transition metal oxide other than titanium dioxide.

5. Use according to Claim 4, characterised in that said other transition metal oxide is red iron oxide.

6. Use according to any preceding claim, characterised in that the or each transition metal oxide comprises between about 2 percent and about 15 percent by weight of the total weight of the material.

7. Use as claimed in Claim 1, characterised in that the material comprises from 99.9 percent to 47.6 percent by weight of polydiorganosiloxane polymer, from 0 percent to 47.6 percent by weight of a reinforcing silica filler, from 0.1 percent to 4.76 percent by weight of an organic peroxide, from 2 percent to 15 percent by weight of titanium oxide having a surface area of at least 10 sqm per gram (BET method), from 2 percent to 15 percent by weight of a transition metal oxide other than titanium dioxide, and at least 25 parts of platinum million parts by weight of the total weight of the material, the platinum being in an unsupported form.

8. Use according to Claim 7, characterised in that the other transition metal oxide is red iron oxide.

9. Use according to any preceding claim, characterised in that the silicone polymer comprises polydimethyl siloxane or a copolymer of dimethyl siloxane with up to 5 % by weight of methyl vinyl siloxane.

10. Use as claimed in any preceding claim in which the article is an optical fibre cable.

## Patentansprüche

1. Verwendung einer Zusammensetzung, enthaltend ein Silikonpolymer, Titandioxid mit einer Oberfläche von mindestens 10 m$^2$ pro Gramm und mindestens etwa 25 Gewichtsteile Platin pro 1 000 000 Gewichtsteilen der Gesamtmasse des Materials, wobei das Platin in nicht abgeschiedener Form vorliegt, auf einem elektrisch nicht-leitfähigen Gegenstand in einer eine Spannung von mehr als 1 KV aufweisenden Hochspannungsumgebung, als ein Isoliermaterial.

2. Verwendung nach Anspruch 1, dadurch gekennzeichnet, daß das Platin in Form von Chloroplatinsäure vorliegt.

3. Verwendung nach Anspruch 1 oder 2, dadurch gekennzeichnet, daß das Titandioxid als pyrogenes Titandioxid vorliegt.

4. Verwendung nach einem jeden der obigen Ansprüche, dadurch gekennzeichnet, daß das Material ein Übergangsmetalloxid enthält, das nicht Titandioxid ist.

5. Verwendung nach Anspruch 4, dadurch gekennzeichnet, daß das andere Übergangsmetalloxid rotes Eisenoxid ist.

6. Verwendung nach einem jeden der obigen Ansprüche, dadurch gekennzeichnet, daß das oder jedes Übergangsmetalloxid in einer Menge von etwa 2 bis etwa 15 Gewichtsprozent, bezogen auf das Gesamtgewicht des Materials, vorhanden ist.

7. Verwendung nach Anspruch 1, dadurch gekennzeichnet, daß das Material von 99,6 bis 47,6 Gewichtsprozent des Polydiorganosiloxan-Polymeren, von 0 bis 47,6 Gewichtsprozent eines verstärkenden Siliciumdioxid-Füllstoffes, von 0,1 bis 4,76 Gewichtsprozent eines organischen Peroxids, von 2 bis 15 Gewichtsprozent Titandioxid mit einer Oberfläche von mindestens 10 m$^2$ pro Gramm (BET-Methode), von 2 bis 15 Gewichtsprozent eines Übergangsmetalloxids, das nicht Titandioxid ist, und mindestens 25 Gewichtsteile Platin pro 1 000 000 Gewichtsteile der Gesamtmasse des Materials, wobei das Platin in nicht abgeschiedener Form vorliegt, enthält.

8. Verwendung nach Anspruch 7, dadurch gekennzeichnet, daß das andere Übergangsmetalloxid rotes Eisenoxid ist.

9. Verwendung nach einem jeden der obigen Ansprüche, dadurch gekennzeichnet, daß das Silikonpolymer Polydimethylsiloxan oder ein Copolymeres des Dimethylsiloxans mit bis zu 5 Gewichtsprozent Methylvinylsiloxan umfaßt.

10. Verwendung nach einem jeden der obigen Ansprüche, bei der der Gegenstand ein optisches Faserkabel ist.

**Revendications**

1. Utilisation comme matière isolante d'une composition comprenant un polymère de silicone, du dioxyde de titane ayant une surface spécifique d'au moins 10 m$^2$/g et au moins environ 25 parties de platine par million de parties en poids du poids total de la matière, le platine étant sous une forme non fixée sur un support, sur un article non électriquement conducteur dans un environnement sous une haute tension supérieure à 1 kV.

2. Utilisation suivant la revendication 1, caractérisée en ce que le platine est sous forme d'acide chloroplatinique.

3. Utilisation suivant la revendication 1 ou la revendication 2, caractérisée en ce que le dioxyde de titane est présent sous forme de dioxyde de titane ultrafin.

4. Utilisation suivant l'une quelconque des revendications précédentes, caractérisée en ce que la matière comprend un oxyde de métal de transition autre que le dioxyde de titane.

5. Utilisation suivant la revendication 4, caractérisée en ce que l'autre oxyde de métal de transition est l'oxyde rouge de fer.

6. Utilisation suivant l'une quelconque des revendications précédentes, caractérisée en ce que le ou chaque oxyde de métal de transition représente environ 2 % à environ 15 % en poids du poids total de la matière.

7. Utilisation suivant la revendication 1, caractérisée en ce que la matière comprend 99,9 % à 47,6 % en poids d'un polymère du type polydiorganosiloxane, 0 % à 47,6 % en poids d'une charge de renforcement du type silice, 0,1 % à 4,76 % en poids d'un peroxyde organique, 2 % à 15 % en poids d'oxyde de titane ayant une surface spécifique d'au moins 10 m$^2$/g (procédé BET), 2 % à 15 % en poids d'un oxyde de métal de transition autre que le dioxyde de titane et au moins 25 parties de platine par million de parties en poids du poids total de la matière, le platine étant sous une forme non fixée sur un support.

8. Utilisation suivant la revendication 7, caractérisée en ce que l'autre oxyde de métal de transition est l'oxyde rouge de fer.

9. Utilisation suivant l'une quelconque des revendications précédentes, caractérisée en ce que le polymère de silicone consiste en polydiméthylsiloxane ou en un copolymère de diméthylsiloxane avec jusqu'à 5 % en poids de méthylvinylsiloxane.

10. Utilisation suivant l'une quelconque des revendications précédentes, dans laquelle l'article est un câble de fibres optiques.